Europäisches Patentamt

European Patent Office

Office européen des brevets

(19)

(11) Numéro de publication: **0 312 477**

**A1**

(12) ## DEMANDE DE BREVET EUROPEEN

(21) Numéro de dépôt: **88440083.9**

(22) Date de dépôt: **12.10.88**

(51) Int. Cl.⁴: **F 23 Q 7/02**
**A 47 J 49/00**

(30) Priorité: **14.10.87 FR 8714403**

(43) Date de publication de la demande:
**19.04.89 Bulletin 89/16**

(84) Etats contractants désignés:
**AT BE CH DE ES FR GB GR IT LI LU NL SE**

(71) Demandeur: **Barberet, Pierre**
**8, rue du Général de Gaulle**
**F-90110 La Chapelle sous Rougemont (FR)**

(72) Inventeur: **Barberet, Pierre**
**8, rue du Général de Gaulle**
**F-90110 La Chapelle sous Rougemont (FR)**

(74) Mandataire: **NITHARDT, Roland**
**CABINET ROLAND NITHARDT 12, rue du 17 Novembre**
**B.P. 1445**
**F-68071 Mulhouse Cedex (FR)**

(54) **Allume-feu électrique.**

(57) La présente invention concerne un allume-feu électrique pour barbecues, cheminées à foyer ouvert ou fourneaux à combustible solide. Il comporte au moins un corps de chauffe à résistance électrique (11) monté sur une structure rigide (10) comprenant une plaque d'appui (12), un manche (13) et de préférence un boîtier (14) qui assure la liaison entre le manche et la plaque d'appui et contient les connexions électriques de la résistance électrique. Deux nervures transversales (15) permettent de maintenir le corps de chauffe à distance constante de la plaque d'appui (12), tandis qu'il est en contact direct avec le combustible.

FIG. 2

**Description**

## ALLUME-FEU ELECTRIQUE.-

La présente invention concerne un allume-feu électrique pour barbecues, cheminées à foyer ouvert, fourneaux à combustible solide ou similaires, comportant une structure sur laquelle est monté au moins un corps de chauffe tubulaire à résistance électrique ayant une face supérieure destinée à être mise en contact direct avec le combustible pendant un temps suffisant pour en provoquer l'incandescence.

On connaît déjà divers systèmes de ce type, notamment par les demandes de brevet FR-A-2 465 455 et FR-A-2 465 953. Des allume-feu électriques décrits dans ces demandes de brevet sont fixés à demeure dans un foyer et comportent des résistances électriques blindées qui sont montées à nu à l'intérieur du foyer. Aucune protection de ces résistances électriques n'est assurée et, lorsque les matériaux combustibles sont allumés, ces résistances sont soumises à la haute température dégagée par les flammes et les braises. De nombreux essais ont démontré que malgré le blindage, les résistances électriques ont une durée de vie extrêmement brève et ne résistent pas plus de quelques heures aux contraintes thermiques auxquelles elles sont soumises dans ces conditions. Par contre, si l'on enferme le corps de chauffe dans un boîtier protecteur perforé, comme le montrent par exemple les publications GB-A-704 484 et CH-A-338 283, le combustible ne peut pas être en contact direct avec le corps de chauffe et il n s'enflamme que très difficilement, ce qui a empêché jusqu'à maintenant une large diffusion de ce genre d'appareils.

Pour pallier ces inconvénients, le DE-C-901 466 propose un allume-feu électrique en forme de grill formé essentiellement par un corps de chauffe tubulaire replié en plusieurs tronçons parallèles liés entre eux par des rangées de cales intermédiaires transversales. Ce grill, muni d'une poignée, est destiné à être posé sur le fond du foyer tout en supportant le combustible à allumer, puis à être retiré dès que le feu a pris, afin d'éviter sa destruction. Toutefois, le corps de chauffe est en contact direct au moins autant avec le foyer qu'avec le combustible, et aussi avec les cales intermédiaires, de sorte qu'une grande partie de la chaleur qu'il produit est dissipée inutilement et qu'il n'atteint pas une température assez élevée pour provoquer une inflammation rapide du combustible.

La présente invention se propose de pallier cet inconvénient en réalisant un allume-feu électrique très efficace, dont le corps de chauffe est susceptible d'être mis en contact direct avec le combustible, puis soustrait aux contraintes thermiques régnant à l'intérieur d'un foyer en service.

Ce but est atteint par un allume-feu électrique du type indiqué en préambule, caractérisé en ce que ladite structure comporte, en dessous du corps de chauffe, un support rigide agencé pour reposer sur une surface du foyer et pourvu d'éléments distanceurs sur lesquels repose la face inférieure du corps de chauffe et qui maintiennent un espacement entre lui et le support ou ladite surface.

Selon un mode de réalisation particulièrement avantageux, ladite structure a une forme de pelle comprenant un manche et un support en forme de plaque d'appui solidaire de ce manche, le corps de chauffe étant monté à une distance sensiblement constante de cette plaque d'appui.

Selon une forme de réalisation préférée, la plaque d'appui est réalisée en un matériau réfractaire, le manche pouvant être réalisé en un matériau mauvais conducteur de la chaleur.

La plaque d'appui comporte de préférence au moins une nervure transversale constituant un élément distanceur. Pour assurer une efficacité maximale de l'allumage de combustible solide disposé sur le corps de chauffe, celui-ci a de préférence la forme d'une double boucle et présente avantageusement quatre segments rectilignes sensiblement parallèles entre eux. Les éléments distanceurs sont de préférence formés par deux nervures disposées transversalement par rapport à ces segments.

Selon un autre mode de réalisation particulièrement avantageux, l'allume-feu électrique peut être monté à demeure dans un foyer et comporte dans ce cas un capot protecteur monté sur la structure et mobile entre une première position dans laquelle le corps de chauffe est à découvert, et une seconde position dans laquelle le corps de chauffe est entièrement recouvert par le capot.

Selon un mode de réalisation préféré, le capot protecteur est coulissant. Il peut être agencé pour coulisser sur deux rails parallèles disposés de part et d'autre du corps de chauffe et reliés par des barrettes transversales formant les éléments distanceurs.

Le capot protecteur coulissant comporte de préférence au moins deux rampes inclinées, disposées à son extrémité antérieure et conçues pour soulever les matériaux combustibles solides lorsque ce capot est amené de sa première position dans sa seconde position. Dans une réalisation particulière, les rails sont avantageusement limités par deux butées sensiblement verticales et ces deux butées sont reliées aux tronçons horizontaux de ces rails par deux zones arquées conçues pour coopérer avec les rampes inclinées du capot protecteur afin de soulever le combustible solide lorsque ledit capot est amené de sa première dans sa seconde position.

La présente invention sera mieux comprise en référence à la description d'exemples de réalisation illustrés par les dessins annexés, dans lesquels :

La figure 1 représente une vue latérale en élévation d'une première forme de réalisation de l'allume-feu électrique selon l'invention,

La figure 2 représente une vue de dessus en perspective de l'allume-feu illustré par la figure 1,

La figure 3 représente une vue en plan de dessus de la partie antérieure de l'allume-feu illustré par les figures 1 et 2,

La figure 4 représente une vue frontale en perspective d'une autre forme de réalisation de l'allume-feu selon l'invention, destiné à être monté à demeure dans un foyer,

La figure 5 représente une vue en élévation de côté de l'allume-feu de la figure 3, et

La figure 6 représente une vue arrière en perspective de l'allume-feu illustré par les figures 4 et 5.

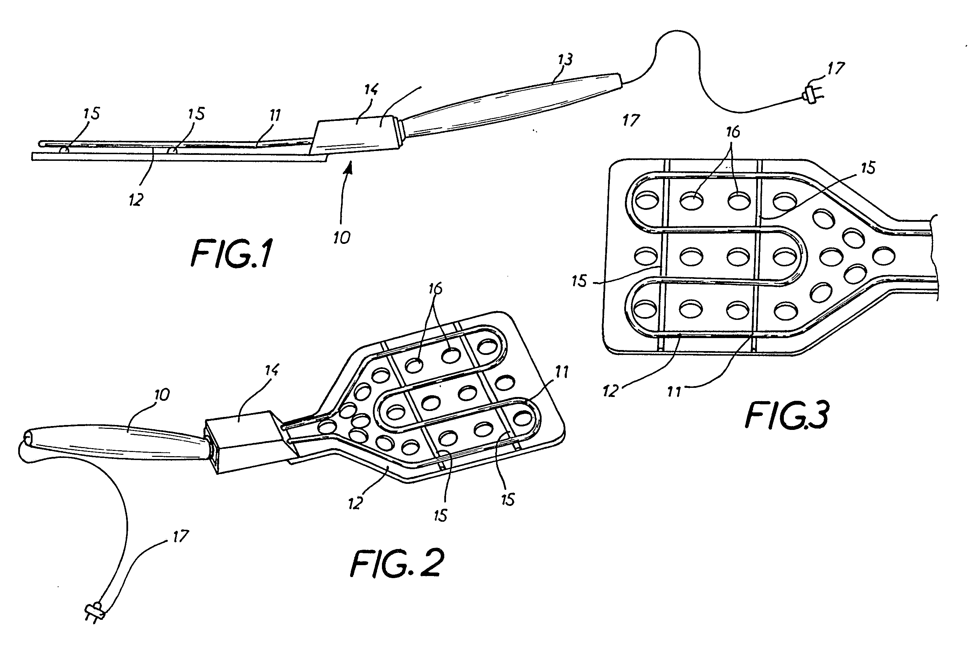

En référence aux figures 1 à 3, l'allume-feu électrique représenté comporte une structure rigide 10 servant de support à un corps de chauffe 11 à résistance électrique. Cette structure rigide se compose essentiellement d'une plaque d'appui 12 et d'une manche 13 qui prolonge cette plaque d'appui. La plaque d'appui 12 a une forme coudée de pelle et est réalisée en un matériau réfractaire tel que par exemple de la fonte. Entre la plaque d'appui 12 et le manche 13, est disposé un boîtier 14 qui assure d'une part la liaison entre cette plaque d'appui et le manche et permet de fixer le corps de chauffe 11, et d'autre part permet de loger la connexion électrique de la résistance. Par ailleurs, ce boîtier peut contenir une minuterie (non représentée) destinée à régler la durée d'un cycle de fonctionnement de l'appareil, afin d'éviter que celui-ci soit chauffé à la fois par la résistance et par le feu pendant une durée prolongée.

La plaque d'appui 12 est pourvue de deux nervures ou bourrelets transversaux 15 qui ont pour but de soutenir le corps de chauffe 11 à une distance sensiblement constante de cette plaque d'appui. Le corps de chauffe 11 comporte extérieurement un élément tubulaire rigide, replié de façon à former une double boucle et à présenter quatre segments rectilignes sensiblement parallèles entre eux. Chacun de ces segments repose sur les nervures 15 par deux points de contact, de sorte qu'il peut se dilater librement par rapport à la plaque 12 et qu'il ne perd pratiquement pas de chaleur par contact avec celle-ci. L'élément tubulaire est de préférence en métal réfractaire inoxydable. D'une manière connue, il peut contenir une résistance électrique formée par un fil métallique noyé dans une poudre réfractaire telle que la magnésie.

Bien que cela ne soit pas indispensable au bon fonctionnement du système, la plaque d'appui 12 en fonte comporte avantageusement des ouvertures 16 qui diminuent son poids et facilitent la ventilation des combustibles solides déposés sur l'allume-feu en service, par exemple si la plaque repose sur une grille, sur des chenêts ou sur un fond de foyer nervuré.

Pour allumer le feu, l'utilisateur met le combustible solide qui peut être du bois, du charbon de bois, du charbon ou des agglomérés de poussière de charbon, etc. sur les tronçons rectilignes du corps de chauffe 11. Le raccordement électrique étant effectué au moyen d'un cordon muni d'une prise de courant 17, le corps de chauffe est échauffé par effet Joule, devient rouge et provoque l'incandescence du combustible solide. Pour les allume-feu qui comportent une minuterie logée dans le boîtier 14, le cycle de fonctionnement normal est par exemple limité à deux minutes. Si ce cycle de fonctionnement à été insuffisamment long pour permettre au feu de prendre convenablement, l'utilisateur laisse l'allume-feu en place et l'enclenche pour un deuxième cycle de fonctionnement. Une fois que le combustible solide est enflammé, l'utilisateur peut retirer l'allume-feu en le saisissant par le manche 13 et en inclinant la plaque de façon à la débarasser du combustible. Ainsi, le corps de chauffe peut être éloigné du brasier pour éviter qu'il soit soumis à des contraintes thermiques qui limiteraient fortement sa durée de vie.

L'allume-feu en forme de pelle décrit ci-dessus est avantageux en ce qu'il peut être utilisé dans n'importe quel foyer. En été, il est possible de s'en servir pour enflammer le charbon de bois dans un barbecue et l'hiver il peut servir à faire démarrer un feu de cheminée.

L'allume-feu illustré par les figures 3 à 6 est monté à demeure dans une cheminée à foyer ouvert, dans une cassette ou dans un fourneau fermé. Il se compose essentiellement d'un corps de chauffe 20 à résistance électrique, qui peut être protégé par un capot mobile 21, comportant une plaque horizontale 22, de préférence perforée, et des rebords latéraux 23. Il est réalisé en un matériau réfractaire tel que la fonte. Ce capot 21 peut coulisser dans le sens de la double flèche A sur deux rails parallèles 24 et 25. A sa partie frontale il comporte une poignée 26 qui permet à l'utilisateur de le déplacer entre ses deux positions extrêmes. Les rails 24 et 25 comportent, à leur extrémité libre, deux butées 27 et 28, disposées sensiblement verticalement et qui se raccordent aux deux rails 24 et 25 par des zones arrondies 29 et 30. Par ailleurs, les rebords latéraux 23 du capot 21 se prolongent à l'avant par deux rampes inclinées 31 et 32, qui constituent en fait les bords supérieurs de deux embouts triangulaires prolongeant lesdits bords latéraux. Les deux rampes 31 et 32 ainsi que les zones arrondies 29 et 30 ont pour but de permettre au capot de soulever les matériaux combustibles au moment de sa mise en place et d'éviter ainsi un coincement empêchant cette mise en place. A cet effet, la plaque 22 est également prolongée à son extrémité antérieure par un plan incliné 33 pouvant être en retrait des rampes 31 et 32 afin d'éviter qu'il soit soulevé par elles.

Les rails 24 et 25 sont reliés rigidement par au moins deux barrettes transversales 34 qui forment avec eux un support 35 pour le corps de chauffe 20, en maintenant celui-ci à distance de la surface sur laquelle reposent les rails, par exemple une grille de foyer ou un fond en briques réfractaires. Comme dans l'exemple précédent, le corps de chauffe ne touche les barrettes 34 que sur quelques points séparés, de sorte que très peu de chaleur est dissipée.

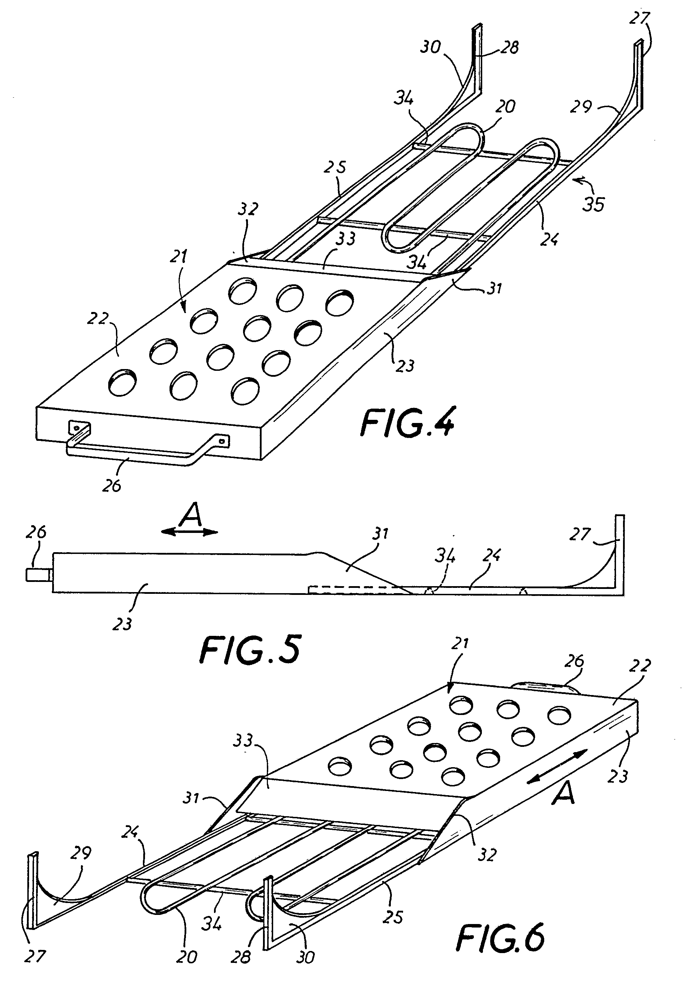

Pour utiliser cet allume-feu, on amène tout d'abord le capot 21 dans sa position de retrait illustrée par les figures 4 et 5, ce qui met à nu le corps de chauffe 20. On dépose le combustible solide sur les branches rectilignes du corps de chauffe et on enclenche le fonctionnement qui est identique à celui décrit ci-dessus. En effet, comme précédemment, la résistance électrique peut être connectée au réseau soit directement soit par l'intermédiaire d'un interrupteur équipé d'une minuterie qui définit un cycle normal de fonctionnement qui peut bien entendu être prolongé si nécessaire. Lorsque le feu a pris, l'utilisateur repousse le capot 21 de manière à masquer intégralement le corps de chauffe 20 et éviter de le soumettre à des contraintes thermiques qui en limiteraient très fortement la durée de vie. Les rampes 31 et 32 ainsi que le plan incliné 33 ont pour effet de soulever les morceaux de bois et de permettre la mise en place facile du capot. En bout de course, les deux zones arrondies 29 et 30 coopèrent avec les rampes 31 et 32 passant à côté d'elles, pour soulever le combustible solide et pour permettre ainsi d'amener le capot 21 en position de protection, dans laquelle le capot recouvre entièrement le corps de chauffe et maintient le combustible à une distance suffisante pour que le corps de chauffe ne soit pas trop chauffé par le brasier. Du reste ce corps est refroidi par de l'air frais aspiré par le brasier si le capot est perforé.

## Revendications

1. Allume-feu électrique pour barbecues, cheminées à foyer ouvert ou fourneaux à combustible solide, comportant une structure sur laquelle est monté au moins un corps de chauffe tubulaire (11, 20) à résistance électrique ayant une face supérieure destinée à être mise en contact avec le combustible pendant un temps suffisant pour en provoquer l'incandescence, caractérisé en ce que ladite structure comporte, en dessous du corps de chauffe (11, 20), un support rigide (12, 35) agencé pour reposer sur une surface du foyer et pourvu d'éléments distanceurs (15, 34) sur lesquels repose la face inférieure du corps de chauffe (11, 20) et qui maintiennent un espacement entre lui et le support ou ladite surface.

2. Allume-feu selon la revendication 1, caractérisé en ce que la structure (10) a une forme de pelle comprenant un manche (13) et un support en forme de plaque d'appui (12) solidaire de ce manche, le corps de chauffe (11) étant monté à une distance sensiblement constante de cette plaque d'appui.

3. Allume-feu selon la revendication 2, caractérisé en ce que la plaque d'appui (12) est réalisée en un matériau réfractaire.

4. Allume-feu selon la revendication 2, caractérisé en ce que la plaque d'appui (12) comporte au moins une nervure transversale (15) constituant un élément distanceur.

5. Allume-feu selon la revendication 4, caractérisé en ce que le corps de chauffe (12) a une form de double boucle et présente quatre segments rectilignes sensiblement parallèles entre eux, et en ce que les éléments distanceurs sont formés par deux nervures (15) disposées transversalement par rapport à ces segments.

6. Allume-feu selon la revendication 1, monté à demeure dans un foyer, caractérisé en ce qu'il comporte un capot protecteur (21) monté sur la structure et mobile entre une première position dans laquelle le corps de chauffe (20) est à découvert, et une seconde position dans laquelle le corps de chauffe (20) est entièrement recouvert par le capot (21).

7. Allume-feu selon la revendication 6, caractérisé en ce que le capot protecteur amovible (21) est coulissant.

8. Allume-feu selon la revendication 7, caractérisé en ce que le capot protecteur (21) est agencé pour coulisser sur deux rails (24 et 25) disposés de part et d'autre du corps de chauffe (20) et reliés par des barrettes transversales (34) formant les éléments distanceurs.

9. Allume-feu selon la revendication 7, caractérisé en ce que le capot protecteur (21) comporte à son extrémité antérieure, au moins deux rampes inclinées (31, 32), conçues pour soulever les matériaux combustibles solides lorsque ce capot est amené de sa première dans sa seconde position.

10. Allume-feu selon les revendications 8 et 9, caractérisé en ce que les rails (24, 25) sont limités par deux butées (27, 28) sensiblement verticales et en ce que ces deux butées sont raccordées aux tronçons horizontaux de ces rails par deux zones arquées (29, 30) conçues pour coopérer avec les rampes inclinées (31, 32) du capot protecteur (21) afin de soulever le combustible solide lorsque ce capot est amené de sa première dans sa deuxième position.

FIG.1

FIG.2

FIG.3

EP 0 312 477 A1

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 726 552 (METCALF) <br> * Page 1, lignes 55-74; figures 1,2 * <br> --- | 1 | F 23 Q   7/02 <br> A 47 J  49/00 |
| A | US-A-2 841 683 (OGLE) <br> * Colonne 2, lignes 37-43; figure 2 * <br> --- | 5 | |
| D,A | GB-A- 704 484 (JOHNSON) <br> * Page 3, revendication 1; figures * <br> --- | 1 | |
| D,A | CH-A- 338 283 (KINDLER) <br> * Page 2, lignes 108-115; figures * <br> --- | 1,2,3 | |
| A | FR-A- 652 158 (GREVE) <br> * En entier * <br> ----- | 6 | |

|  |  |  | DOMAINES TECHNIQUES RECHERCHES (Int. Cl.4) |
|---|---|---|---|
|  |  |  | F 23 Q <br> A 47 J <br> F 24 B |

Le présent rapport a été établi pour toutes les revendications

| Lieu de la recherche | Date d'achèvement de la recherche | Examinateur |
|---|---|---|
| LA HAYE | 12-01-1989 | VANHEUSDEN J. |